# EUROPÄISCHE PATENTSCHRIFT

(11) **EP 1 626 494 B1**
(45) Veröffentlichungstag und Bekanntmachung des Hinweises auf die Patenterteilung: **24.11.2010**
(21) Anmeldenummer: 05011807.4
(22) Anmeldetag: 01.06.2005
(51) Int. Cl.: H02M 7/48

(54) **Verfahren zum Umwandeln einer elektrischen Gleichspannung einer Gleichspannungsquelle, insbesondere einer Photovoltaik-Gleichspannungsquelle in eine Wechselspannung**
Method of converting a DC voltage of a DC source, in particular of a photovoltaic DC source, in an AC voltage
Procédé pour convertir une tension continue d'une source de tension continue, en particulier d'une source de tension continue PHOTOVOLTAIQUE, en une tension alternative

(30) Priorität: 25.06.2004 DE 102004030912
(43) Veröffentlichungstag der Anmeldung: 15.02.2006
(60) Teilanmeldung: 10183310.1
(73) Patentinhaber: SMA Solar Technology AG, 34266 Niestetal (DE)
(72) Erfinder: Victor, Matthias, Dr., 34266 Niestetal (DE); Greizer, Frank, 34240 Kaufungen (DE); Bremicker, Sven, 36211 Alheim (DE); Hübler, Uwe, 34132 Kassel (DE)
(74) Vertreter: Walther, Walther & Hinz GbR

(56) Entgegenhaltungen:
- EP-A- 1 337 033
- DE-A1- 10 221 592
- US-A- 5 896 282

## Beschreibung

Die Erfindung bezieht sich auf ein Verfahren mit den im Oberbegriff des Anspruchs 1 angegebenen Merkmalen.

Die DE 197 32 218 C1 beschreibt eine transformatorlose Wechselrichter-Schaltungsanordnung mit einem invertierenden hoch-/tiefsetzenden Wandlerschaltkreis und einem nichtinvertierenden Wandlerschaltkreis. Derartige Wechselrichter werden zur Ankopplung von Photovoltaikanlagen verwendet. Die Schaltung weist eine potentialfeste Direktverbindung auf, d.h. eine auf festem Potential bleibende Leiterverbindung auf. Zwischen einem der beiden Gleichspannungsanschlüsse und einem der Wechselspannungsanschlüsse ist es bei Bedarf möglich, diese Direktverbindung als Nullleiter des Systems zu verwenden und daran beispielsweise den Minusanschluss der Gleichspannungsquelle anzukoppeln, was zur Vermeidung von EMV-Problemen von großem Vorteil ist. Durch die Schaltung soll eine Bereitstellung eines transformatorlosen Wechselrichters mit einem geringen Gewicht und Bauvolumen aber auch mit hoher Personensicherheit und geringen EMV-Problemen möglich sein.

Eine Wechselrichterschaltung mit einer Halbleiterbrücke, einem Solargenerator und einem zwischen Solargenerator und Halbleiterbrücke geschalteten Schaltelement ist aus der DE 103 12 921 A1 bekannt. Diese Schaltungsanordnung ist derart ausgebildet, dass bei Überschreitung einer definierten Gleichspannung des Solargenerators das Schaltelement geöffnet und bei Unterschreitung der Generatorspannung das Schaltelement eingeschaltet wird, so dass der für die Wechselrichterschaltung oder den Verbraucher mögliche Eingangsspannungsbereich erhöht wird. Eine Vermeidung hochfrequenter Spannungen bzw. das Beseitigen von EMV-Problemen wird durch die Ausbildung der Schaltung nicht erreicht.

Die DE 102 21 592 A1 offenbart einen transformatorlosen Wechselrichter mit einer Brückenschaltung. Bei dieser Schaltung sind zwei getrennte, elektrische Verbindungspfade vorgesehen, in denen jeweils ein Schalter sowie in Reihe geschaltete Gleichrichterdioden vorgesehen sind. Diese sind in den einzelnen Verbindungspfaden in Durchlassrichtung geschaltet. Im Gegensatz zu einer symmetrischen Taktung wird durch diese Schaltung ein Stromrippel im Ausgangsstrom deutlich reduziert. Die zusätzlichen Freilaufdioden erlauben eine ohmsche Entkopplung zwischen einem Solargenerator und den Wechselspannungsanschlüssen. Dadurch werden hochfrequente Spannungssprünge an den Anschlussleitungen des Generators vermieden, wodurch das EMV-Verhalten verbessert wird.

Bekannt ist es darüber hinaus, für transformatorlose Photovoltaik-Wechselrichter eine H-Brückenschaltung mit vier Halbleiterschaltern einzusetzen, die so abwechselnd geschaltet werden, dass aus der anliegenden Gleichspannung zwischen den Abzweigen der Brückenhälften eine Wechselspannung entsteht. Die Schaltelemente werden zudem symmetrisch getaktet. Hierbei wird ein Oberschalter einer Brückenhälfte zusammen mit einem anderen Unterschalter der anderen Brückenhälfte synchron mit einer hohen Taktfrequenz pulsweitenmoduliert getaktet.

Zur Reduzierung von Oberschwingungen der so erzeugten Wechselspannung werden Drosseln eingesetzt. Damit die Oberschwingung in der Wechselspannung gering gehalten werden, müssen die Drosseln relativ groß dimensioniert werden. Bei dieser Lösung ergeben sich aber relativ hohe Ummagnetisierungsverluste in den Drosseln, so dass der Wirkungsgrad der Schaltung reduziert wird.

Außerdem entstehen weitere Verluste, weil gleichzeitig zwei Schaltelemente ein- und abgeschaltet werden und im Freilaufzustand der Strom über zwei Freilaufdioden in den Gleichspannungszwischenkreis fließt. Die Gleichspannung im Zwischenkreis wirkt im Freilaufzustand als Gegenspannung, was einen höheren Stromrippel und damit eine erhöhte Verlustleistung zur Folge hat.

Um diese Verluste zu reduzieren, ist es bekannt, die Brücke asymmetrisch zu takten. Das heißt, dass während beispielsweise die oberen Schalter mit Netzfrequenz angesteuert werden, die unteren Schalter mit der hohen Taktfrequenz angesteuert werden. Damit entfällt im Freilaufzustand die Gegenspannung aus dem Zwischenkreis, da der Strom nur über eine Diode und einen Schalter kommutiert. Dies führt zu einem geringeren Stromrippel und zu einer Reduzierung der Verluste. Allerdings ergeben sich durch diese asymmetrische Ansteuerung an den Klemmen des Photovoltaikgenerators hochfrequente Potentialschwankungen, die das EMV-Verhalten des Generators verschlechtern.

Eine Maßnahme, die die Nachteile beider Lösungen verhindert, ist in der Druckschrift DE102 21 592 A1 gezeigt und beschrieben. Hierbei ist vorgesehen, dass zusätzlich zwei Verbindungspfade zwischen den Ausgängen einer Brückenschaltung bzw. einer H-Brücke vorhanden sind. In den Verbindungspfaden liegen vier Halbleiter-Bauelemente, und zwar jeweils ein weiteres Schaltelement mit zugehöriger Treiberstufe und eine in Reihe geschaltete Diode.

Eine Vermeidung beider Nachteile wird also durch einen komplexeren Schaltungsaufbau aufgrund der wesentlich höheren Anzahl an Bauelementen erkauft, wodurch die Zuverlässigkeit der Schaltung sinkt und der Materialpreis steigt.

Die Druckschrift EP 1 337 033 zeigt eine Schaltungsanordnung mit den Merkmalen des Oberbegriffs des Anspruchs 7.

Der vorliegenden Erfindung liegt die Aufgabe zugrunde, ein Verfahren der gattungsgemäßen Art anzugeben, bei dem einerseits hochfrequente Spannungsanteile an den Anschlüssen des Generators vermieden werden, und andererseits ein einfacher Schaltungsaufbau in verlustarmer Ausführung und somit hohem Wirkungsgrad gegeben ist. Darüber hinaus sollen die Materialkosten reduziert und die Zuverlässigkeit erhöht werden.

Diese Aufgabe wird dadurch gelöst, dass der Wechselspannungskreis während der Freilaufphasen vom Gleichspannungskreis mittels eines im Gleichspannungskreis zusätzlich angeordneten Schaltelementes entkoppelt wird. Erfindungsgemäß fließt in der Brückenschaltung ein Freilaufstrom über die inneren Elemente der Brücke, so dass durch den über den zusätzlichen geöffneten Schalter entkoppelten Zustand der beiden Kreise keine hochfrequenten, durch Taktvorgänge erzeugten Störungen im Gleichspannungskreis auftreten.

Durch das erfindungsgemäße Verfahren werden in einfacher Weise und mit nur einem zusätzlichen Bauteil (gegenüber einer einfachen H-Brücke mit vier Schaltelementen und vier Freilaufdioden) hochfrequente Spannungsanteile auf den Anschlüssen des Gleichspannungszwischenkreises vermieden. Die Komplexität der Schaltung sinkt gegenüber einer H-Brücke mit zusätzlichen Verbindungspfaden (nach DE102 21 592A1 mit sechs Schaltelementen und sechs Freilaufdioden), da also nur ein Halbleiter-Schaltelement mit zugehöriger Ansteuereinheit anstelle von zwei zusätzlichen Halbleiter-Schaltelementen einschließlich Ansteuereinheiten und zwei zusätzlichen Dioden erforderlich ist (insgesamt nur fünf Schaltelemente mit fünf Freilaufdioden). Die Zusatzkosten und die Ausfallwahrscheinlichkeit werden dadurch minimiert.

Ein Ansteuersignal für das zusätzliche Schaltelement kann außerdem bei der erfindungsgemäßen Lösung ohne zusätzlichen Aufwand für eine Ansteuerschaltung durch eine logische Verknüpfung aus Ansteuersignalen von beispielsweise den unteren Schaltelementen der H-Brücke gewonnen werden.

Durch das erfindungsgemäße Verfahren ist in vorteilhafter Weise ein asymmetrischer Betrieb ohne hochfrequente Störungen möglich, insbesondere wenn nach einer vorteilhaften Ausführungsform der Erfindung die Brückenschaltung derart angesteuert wird, dass das zusätzliche, im Gleichspannungskreis liegende Schaltelement in einer Halbwelle synchron mit einem Unterschalter der einen Brückenhälfte getaktet wird, während es bei der anderen Halbwelle synchron mit einem Unterschalter der anderen Brückenhälfte getaktet wird. Der Zusatzschalter wird demnach jeweils nur mit einem einzigen Schalter gleichzeitig getaktet.

Durch den asymmetrischen Betrieb werden Verluste minimiert und der Wirkungsgrad der Schaltung verbessert. Das erfindungsgemäße Verfahren nach dieser vorteilhaften Ausführungsform verbindet also mit minimalem Bauteilaufwand die Vorteile einer einfachen H-Brücken-Schaltung mit unsymmetrischer Taktung, die einen guten Wirkungsgrad aufweist, mit den Vorteilen einer einfachen H-Brücken-Schaltung mit symmetrischer Taktung, die hochfrequente Signale an den Generatorklemmen vermeidet.

Ebenso wie bei der asymmetrischen Taktung tritt im Gegensatz zu der symmetrischen Taktung ein Zustand einer Nullspannung ein, da die Spannung an den Ausgangsklemmen des Wechselrichters zwischen +U, Null, -U hin und her geschaltet wird. Dadurch werden die Ummagnetisierungsverluste in den Netzdrosseln reduziert und insbesondere auch der Teillastwirkungsgrad verbessert.

Wenn die entsprechenden Schaltelemente der Brückenschaltungen im kHz-Bereich getaktet werden, spielen die Durchlassverluste gegenüber den Schaltverlusten eine untergeordnete Rolle, so dass der Wirkungsgrad durch das zusätzliche Schaltelement nahezu gleich der H-Brücke mit zusätzlichen Verbindungspfaden zwischen den Ausgängen der Brückenschaltung ist.

Da durch die Erfindung einerseits eine Spannung an den Wechselspannungsklemmen praktisch zwischen einem positiven Spannungspotential, Null und einem negativen Spannungspotential hin und her geschaltet wird und andererseits durch eine pulsweitenmodulierte Taktung eine Anpassung an die Last möglich ist, ist eine Anwendung der Erfindung beispielsweise bei einem transformatorlosen Photovoltaik-Wechselrichter möglich.

Dadurch dass eine antiparallele Diode des Zusatzschalters vorgesehen ist, die nicht als Freilaufdiode wirkt, bzw. nicht im Eingriff ist, sowie beispielsweise die unteren Freilaufdioden der getakteten Schalter im Normalfall ebenfalls nicht im Eingriff sind, besteht die Möglichkeit einer Optimierung der verwendeten Halbleiter. Dadurch können Halbleiterbauelemente verwendet werden, die zwar ungünstige Diodeneigenschaften aufweisen, andererseits aber gute Schalteigenschaften und niedrige Durchlassverluste aufweisen. Dadurch können für die zu taktenden Schaltelemente insbesondere neueste MOSFET- Halbleiterbauelemente eingesetzt werden, die eine weitere Optimierung hinsichtlich Wirkungsgrad und Kostenreduktion ermöglichen.

Die vorliegende Erfindung betrifft ein Verfahren nach Anspruch 1 und eine Schaltungsanordnung nach Anspruch 7.

Weitere Weiterbildungen der Erfindung sind in den Unteransprüchen genannt.

Die Erfindung sowie Vorteile derselben wird nun anhand der Zeichnungen erläutert.

Es zeigen:
- Fig.1: eine erfindungsgemäße Schaltungsanordnung eines Wechselrichters
- Fig.2: ein Schaltbild mit einem Stromverlauf während einer positiven Halbwelle
- Fig.3: ein Schaltbild mit einem Stromverlauf während einer negativen Halbwelle, und
- Fig.4: ein Schaltbild mit einem Stromverlauf im entkoppelten Zustand.

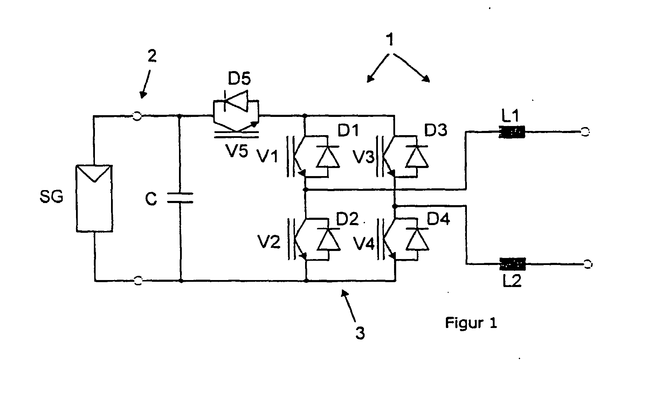

Die Figur 1 zeigt einen erfindungsgemäßen Wechselrichter 1 mit einem Solargenerator SG bzw. einem Photovoltaikgenerator. Diese Schaltung erlaubt ein Verfahren zum Umwandeln einer elektrischen Gleichspannung einer Photovoltaik-Gleichspannungsquelle in eine Wechselspannung mit einer Frequenz von zum Beispiel 50Hz.

An den Eingangsklemmen 2 des Wechselrichters 1 ist ein Glättungskondensator C bzw. Speicherkondensator parallel zum Solargenerator SG geschaltet. Der Solargenerator SG mit dem Kondensator C bildet einen Gleichspannungszwischenkreis bzw. DC-Kreis. Der Wechselrichter besitzt eine H-Brücke 3 mit vier Halbleiter-Schaltelementen V1-V4 und einen Zusatzschalter V5. Parallel zu den Schaltelementen V1-V5 sind Freilaufdioden D1-D5 geschaltet. An dem Brückenabzweig liegen im Wechselspannungsteil zwei Drosseln L1 und L2.

Die oberen Schaltelemente V1 und V3 werden mit Netzfrequenz zum Beispiel 50Hz angesteuert, während die unteren Schaltelemente V2 und V4 mit einer hohen Taktfrequenz im kHz-Bereich, zum Beispiel 16 kHz, pulsweitenmoduliert getaktet werden.

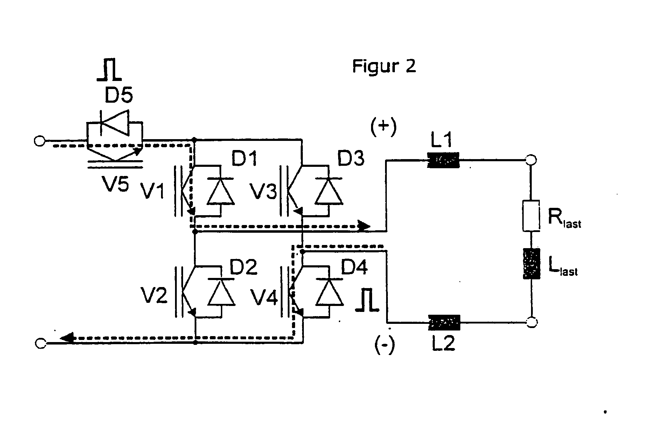

Das zusätzliche Halbleiter-Schaltelement V5, das insbesondere auch als MOSFET-Bauelement ausgeführt sein kann, wird zusammen mit den unteren Schaltelementen V2 bzw. V4 mit der hohen Taktfrequenz, zum Beispiel 16 kHz, getaktet. Das Schaltelement V5 wird also in der einen Halbwelle der Netzspannung, in der das Schaltelement V1 eingeschaltet ist, synchron und pulsweitenmoduliert mit dem Schaltelement V4 getaktet, wie Fig.2 zeigt. Der Laststromaufbau erfolgt dann über die Schaltelemente V5, V1 und V4. Werden die hochfrequent taktenden Halbleiterschalter V5 und V4 synchron ausgeschaltet, so kommutiert der Laststrom in einen Freilaufpfad bestehend aus V1 und der zu V3 antiparallele Diode D3.

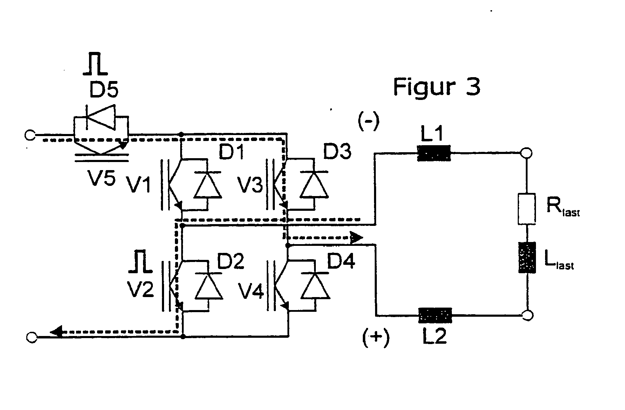

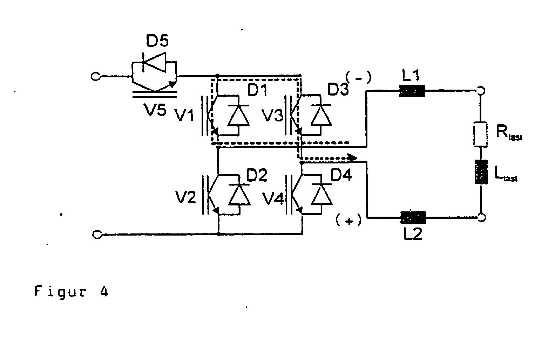

Wie Fig. 3 veranschaulicht, wird in der anderen Halbwelle der Netzspannung (negative Halbwelle), in dem das Schaltelement V3 eingeschaltet ist, das Schaltelement V5 synchron und pulsweitenmoduliert mit dem Schaltelement V2 getaktet. Der Laststromaufbau erfolgt dann über die Schaltelemente V5, V3 und V2. Werden die mit hoher Frequenz taktenden Schaltelemente V5 und V2 synchron ausgeschaltet, dann kommutiert der Laststrom auf die parallele Freilaufdiode D1 des Schaltelementes V1, wie Fig. 4 zeigt.

Dadurch wird erfindungsgemäß mittels eines im Gleichspannungskreis angeordneten Schaltelementes V5 der Lastkreis von den Anschlüssen des Generators entkoppelt, wodurch hochfrequente Spannungskomponenten auf diesen Anschlussleitungen vermieden werden. Das Schaltelement V5 dient demnach als zusätzlicher Entkoppelschalter des einen Gleichspannungsanschlusses gegenüber dem Wechselspannungskreis. Der andere Gleichspannungsanschluss ist gleichsam über die Schalter V2 bzw. V4 von dem Wechselspannungskreis entkoppelt.

Hierbei ist es wichtig, dass sich die Spannung über den Schaltelementen V5 und V2 bzw. V4 symmetrisch aufteilt. Daher sind vorzugsweise Schaltelement bzw. Diodenelement mit gleichen Eigenschaften einzusetzen.

Zusätzlich wird durch diesen Freilauf der Stromrippel und damit die Ummagnetisierungsverluste in den Netzdrosseln L1 und L2 reduziert.

Durch diese Erfindung wird in einfacher Weise ein verlustarmer, transformatorloser und kostenoptimierter Wechselrichter geschaffen, der keine hochfrequenten Störungen im Gleichspannungskreis verursacht.

### Bezugszeichenliste:

- 1: Wechselrichter
- 2: Eingangsklemmen
- 3: Brücke

- SG: Solargenerator

- V1-V4: Schaltelemente der Brückenschaltung
- D1-D4: Freilaufelemente der Brückenschaltung
- D5: Diode

- V5: Entkoppelschalter (Schaltelement)
- C: Glättungskondensator
- L1-L2: Netzdrosseln

- R_{Last}: Lastwiderstand
- L_{Last}: Lastinduktivität

## Patentansprüche

1. Verfahren zum Umwandeln einer elektrischen Gleichspannung einer Gleichspannungsquelle, insbesondere einer Photovoltaik-Gleichspannungsquelle in eine Wechselspannung mit einer Frequenz durch eine Schaltelemente (V1 - V4) und Freilaufelemente (D1 - D4) aufweisende Brückenschaltung, wobei die Schaltelemente (V1-V4) der Brückenschaltung derart angesteuert werden, dass jeweils ein Schaltelement (V1, V3) einer Brückenhälfte netzfrequent angesteuert, und ein Schaltelement (V4, V2) einer anderen Brückenhälfte hochfrequent getaktet wird, wobei ein Gleichspannungskreis, ein Wechselspannungskreis und mehrere Freilaufphasen vorhanden sind,
**dadurch gekennzeichnet,**
**dass** während der Freilaufphasen der Wechselspannungskreis vom Gleichspannungskreis mittels eines im Gleichspannungskreis angeordneten Schaltelementes (V5) entkoppelt wird, wobei in der Brückenschaltung im entkoppelten Zustand ein Freilaufstrom durch eines der Freilaufelemente (D1, D3) fließt.

2. Verfahren nach Anspruch 1,
**dadurch gekennzeichnet,**
**dass** eine Reduzierung von Oberschwingungen durch mindestens eine Drossel, insbesondere zwei in Reihe und an unterschiedlichen Brückenabgriffen angeordneten Drosseln (L1, L2), im Wechselspannungskreis erfolgt.

3. Verfahren nach einem der vorhergehenden Ansprüche,
**gekennzeichnet durch**
eine Anwendung bei einem transformatorlosen Photovoltaik-Wechselrichter (1), insbesondere Photovoltaik-Wechselrichter.

4. Verfahren nach einem der vorhergehenden Ansprüche,
**dadurch gekennzeichnet,**
**dass** die entsprechenden Schaltelemente (V2, V4, V5) der Brückenschaltung im kHz-Bereich getaktet werden.

5. Verfahren nach einem der vorhergehenden Ansprüche,
**dadurch gekennzeichnet,**
**dass** die entsprechenden Schaltelemente (V2, V4, V5) der Brückenschaltung pulsweitenmoduliert getaktet werden.

6. Verfahren nach einem der vorhergehenden Ansprüche,
**dadurch gekennzeichnet,**
**dass** das zusätzliche, im Gleichspannungskreis liegende zusätzliche Schaltelement (V5) in einer Halbwelle synchron mit einem getakteten Schaltelement (V2) getaktet wird, während es bei der anderen Halbwelle synchron mit einem anderen Schaltelement (V4) getaktet wird.

7. Schaltungsanordnung zur Umwandlung einer Gleichspannung in eine Wechselspannung, mit einer Schaltelemente (V1-V4) und Freilaufelemente (D1-D4) aufweisenden Brückenschaltung, einem im Gleichspannungskreis angeordneten zusätzlichen Schaltelement (V5) und einer Ansteuerschaltung zum Ansteuern der genannten Schaltelemente (V1-V5),
**dadurch gekennnzeichnet,**
dass die Ansteuerschaltung zur Durchführung des Verfahrens nach Anspruch 1 eingerichtet ist.

8. Schaltungsanordnung nach Anspruch 7,
**dadurch gekennzeichnet,**
**dass** das zusätzliche Schaltelement (V5) mit einer antiparallelen Diode (D5) versehen ist.

9. Schaltungsanordnung nach Anspruch 7 oder 8,
**dadurch gekennzeichnet,**
**dass** die Schaltelemente der Brückenschaltung (V1 -V5), insbesondere nur die hochfrequent zu taktenden Schaltelemente (V2, V4) und das zusätzliche Schaltelement (V5) als MOSFET-Halbleiterbauelemente ausgebildet sind.

10. Wechselrichter, insbesondere Photovoltaik-Wechselrichter mit einer Schaltungsanordnung nach einem der vorhergehenden Ansprüche
**gekennzeichnet durch**
eine transformatorlose Ausbildung.

## Claims

1. Method of transforming an electrical direct voltage of a direct voltage source, particularly of a photovoltaic direct voltage source, into an alternating voltage with a frequency by a bridge circuit having switching elements (V1 - V4) and free-wheeling elements (D1 - D4), wherein the switching elements (V1 - V4) of the bridge circuit are activated in such a manner that in each instance one switching element (V1, V3) of one bridge half is activated at mains frequency and one switching element (V4, V2) of the other bridge half is pulsed at high frequency, wherein a direct voltage circuit, an alternating voltage circuit and a plurality of free-wheeling phases are present, **characterised in that** during the free-wheeling phases the alternating voltage circuit is decoupled from the direct voltage circuit by means of a switching element (V5) arranged in the direct voltage circuit, wherein a free-wheeling current flows through one of the free-wheeling elements (D1, D3) in the bridge circuit in the decoupled state.

2. Method according to claim 1, **characterised in that** a reduction in harmonic components is carried out in the alternating voltage circuit by at least one choke, particularly two chokes (L1, L2) arranged in series and at different bridge taps.

3. Method according to any one of the preceding claims, **characterised by** use in a transformerless photovoltaic alternating DC-AC converter (1), particularly a photovoltaic DC-AC converter.

4. Method according to any one of the preceding claims, **characterised in that** the corresponding switching elements (V2, V4, V5) of the bridge circuit are pulsed in the kHz range.

5. Method according to any one of the preceding claims, **characterised in that** the corresponding switching elements (V2, V4, V5) of the bridge circuit are pulsed by pulse width modulation.

6. Method according to any one of the preceding claims, **characterised in that** the additional switching element (V5), which lies in the direct voltage circuit, is pulsed in a half wave synchronously with one pulsed switching element (V2), whilst in the other half wave it is pulsed synchronously with another switching element (V4).

7. Circuit arrangement for transforming a direct voltage into an alternating voltage, with a bridge circuit having switching elements (V1 - V4) and free-wheeling elements (D1 - D4), an additional switching element (V5) arranged in the direct voltage circuit and an activating circuit for activation of the said switching elements (V1 - V5), **characterised in that** the activating circuit is arranged to perform the method according to claim 1.

8. Circuit arrangement according to claim 7, **characterised in that** the additional switching element (V5) is provided with an anti-parallel diode (D5).

9. Circuit arrangement according to claim 7 or 8, **characterised in that** the switching elements of the bridge circuit (V1 - V5), particularly only the switching elements (V2, V4) to be pulsed at high frequency and the additional switching element (V5), are constructed as MOSFET semiconductor components.

10. DC-AC converter, particularly photovoltaic DC-AC converter, with a circuit arrangement according to any one of the preceding claims, **characterised by** a transformerless construction.

## Revendications

1. Procédé pour convertir une tension électrique continue d'une source de tension continue, en particulier d'une source de tension continue photovoltaïque, en une tension alternative possédant une fréquence donnée par l'action d'un circuit en pont comportant des éléments interrupteurs (V1 - V4) et des éléments de roue libre (D1 - D4), dans lequel les éléments interrupteurs (V1 - V4) du circuit en pont sont excités de façon telle qu'un élément interrupteur (V1, V3) d'un demi-pont est excité à la fréquence du réseau et qu'un élément interrupteur (V4, V2) d'un autre demi-pont est cadencé à une haute fréquence, et dans lequel il est prévu un circuit de tension continue, un circuit de tension alternative et plusieurs phases de roue libre,
**caractérisé en ce que,**
pendant la phase de roue libre, le circuit de tension alternative est découplé du circuit de tension continue au moyen d'un élément interrupteur (V5) disposé dans le circuit de tension continue et, à l'état découplé, un courant de roue libre circule dans le circuit en pont à travers un des éléments de roue libre (D1, D3).

2. Procédé selon la revendication 1,
**caractérisé en ce que**
une réduction des harmoniques est réalisée dans le circuit de tension alternative par au moins une réactance, en particulier par deux réactances (L1, L2) disposées en série et connectées aux différentes prises du pont.

3. Procédé selon l'une des revendications précédentes,
**caractérisé par**
son utilisation dans un onduleur photovoltaïque sans transformateur (1), en particulier dans un onduleur photovoltaïque.

4. Procédé selon l'une des revendications précédentes,
**caractérisé en ce que**
les éléments interrupteurs correspondants (V2, V4, V5) du circuit en pont sont cadencés dans la gamme du kHz.

5. Procédé selon l'une des revendications précédentes,
**caractérisé en ce que**
les éléments interrupteurs correspondants (V2, V4, V5) du circuit en pont sont cadencés par modulation de la largeur des impulsions.

6. Procédé selon l'une des revendications précédentes,
**caractérisé en ce que,**
dans une demi-onde, l'élément interrupteur supplémentaire (V5) situé dans le circuit de tension continue est cadencé en synchronisme avec un élément interrupteur cadencé (V2), tandis que, dans l'autre demi-onde, il est cadencé en synchronisme avec un autre élément interrupteur (V4).

7. Dispositif de circuit pour la conversion d'une tension continue en une tension alternative, comprenant un circuit en pont comportant des éléments interrupteurs (V1 - V4) et des éléments de roue libre (D1 - D4), un élément interrupteur supplémentaire (V5) disposé dans le circuit de tension continue, et un circuit d'excitation destiné à exciter lesdits éléments interrupteurs (V1 - V5),
**caractérisé en ce que**
le circuit de commande est conçu pour la mise en oeuvre du procédé selon la revendication 1.

8. Dispositif de circuit selon la revendication 7,
**caractérisé en ce que**
l'élément interrupteur supplémentaire (V5) est pourvu d'une diode antiparallèle (D5).

9. Dispositif de circuit selon la revendication 7 ou 8,
**caractérisé en ce que**
les éléments interrupteurs du circuit en pont (V1 - V5), en particulier uniquement les éléments interrupteurs qui doivent être cadencés à haute fréquence (V2, V4) et l'élément interrupteur supplémentaire (V5) sont constitués par des composants à semi-conducteur MOSFET.

10. Onduleur, en particulier onduleur photovoltaïque, comprenant un dispositif de circuit selon l'une des revendications précédentes,
**caractérisé par**
une constitution sans transformateur.
